**Europäisches Patentamt**

**European Patent Office**

**Office européen des brevets**

(19)

(11) **EP 1 058 086 A1**

(12) **EUROPEAN PATENT APPLICATION**

(43) Date of publication:
06.12.2000 Bulletin 2000/49

(51) Int Cl.$^7$: **G01B 5/213**

(21) Application number: **00111608.6**

(22) Date of filing: **31.05.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **04.06.1999 IT TO990473**<br><br>(71) Applicant: **CORTI, Luca**<br>**11024 CHATILLON (Aosta) (IT)** | (72) Inventor: **CORTI, Luca**<br>**11024 CHATILLON (Aosta) (IT)**<br><br>(74) Representative: **Fioravanti, Corrado et al**<br>**Jacobacci & Perani S.p.A.**<br>**Corso Regio Parco 27**<br>**I-10152 Torino (IT)** |

(54) **Determining the diameter of a circle by a pair of arms and an angle**

(57) An instrument for determining the diameter of a circle comprises a pair of arms articulated to one another and having three reference points which can be positioned at three respective points on the circle; a first reference point (Y) is located at the articulation, a second reference point (K) is located on one arm (11), and a third reference point (Z) is located on the other arm (12). The second reference point (K) and the third reference point (Z) are disposed at the same distance (b) from the first reference point (Y). The instrument further comprises means (14, 15, 16) for measuring an angle (β) formed by a straight line joining the second point (E) and the third point (G) and by a straight line joining the second point (E) or the third point (G) to the first point (F). The diameter (2R) of a circle extending through the three points (F, E, G) is found by the equation 2R=b/sinβ.

FIG. 5

EP 1 058 086 A1

**Description**

The present invention relates to an instrument for determining the diameter of a circle.

At the moment, particularly in the fields of building, carpentry and joinery, when it is necessary to measure the diameter of a circle or the radius of curvature of a curve, for example, for the construction of arching, curved railings, certain items of furnishing, etc., approximate measurements or standard curve shapes are often used.

The object of the present invention is to provide an instrument which enables the diameter of a circle or the radius of curvature of a curved line to be determined easily and accurately.

This object is achieved, according to the present invention, by an instrument having the characteristics set forth in Claim 1.

Further important characteristics are recited in the further, dependent claims.

The characteristics and the advantages of the invention will become clear from the detailed description of some embodiments thereof, given with reference to the appended drawings, which are provided by way of non-limiting example, and in which:

Figures 1 and 2 show geometrical figures for an understanding of the principles upon which the present invention is based,

Figures 3 and 4 are plan views of the instrument according to the invention in its closed and fully open conditions,

Figure 5 is a plan view of the measuring instrument of the present invention,

Figures 6 and 7 are partial plan views of a first variant of the instrument of the invention which is suitable for connection to an optical encoder, in the open and the closed condition, respectively,

Figures 8 and 9 are partial plan views of a second variant of the invention, in the open and the closed condition, respectively,

Figure 10 is a plan view showing a detail of a further variant of the instrument according to the invention, on an enlarged scale,

Figure 11 is a section taken on the line XI-XI of Figure 10,

Figure 12 is a block diagram of an electronic circuit for calculating and displaying the diameter value according to a variant of the invention in which the instrument is provided with an optical encoder, and

Figures 13A, 13B, 13C and 14 are plan views of another possible variant of the invention.

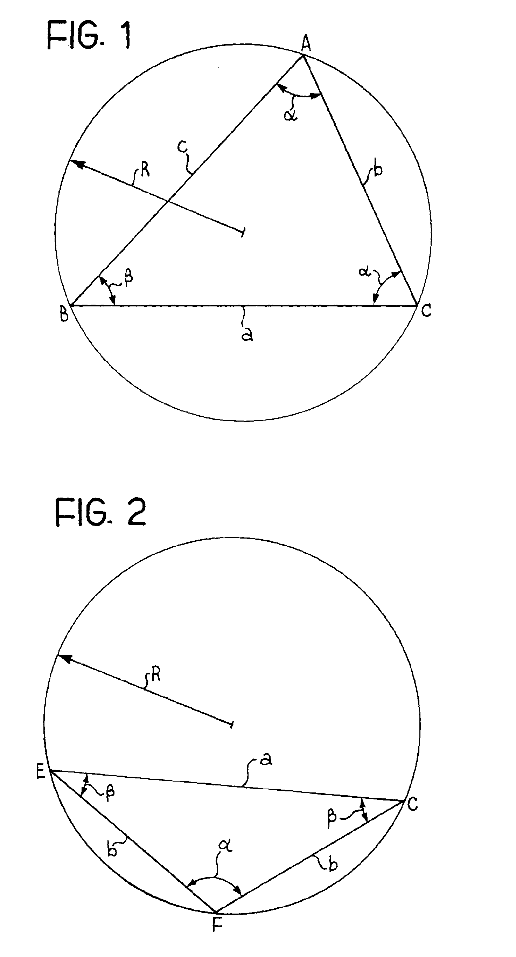

With reference initially to Figure 1, given a circle M the radius R or the diameter 2R of which is to be measured, and a triangle ABC inscribed therein, it is known from trigonometry that:

$$\alpha + \beta + \gamma = 180°,$$

and that

$$a/\sin \alpha = b/\sin \beta = c/\sin \gamma = 2R.$$

With reference to Figure 2, if an isosceles triangle EFG is inscribed in the circle M, and if the length of the base EG of the triangle is indicated $\underline{a}$ and the length of each of its equal sides EF and FG is indicated $\underline{b}$, it is known from trigonometry that

$$(1) \qquad 2R = \underline{b}/\sin \beta$$

If the value of $\underline{b}$ is known and the amplitude of the angle β is measured, it is thus possible to determine the diameter 2R by means of equation (1).

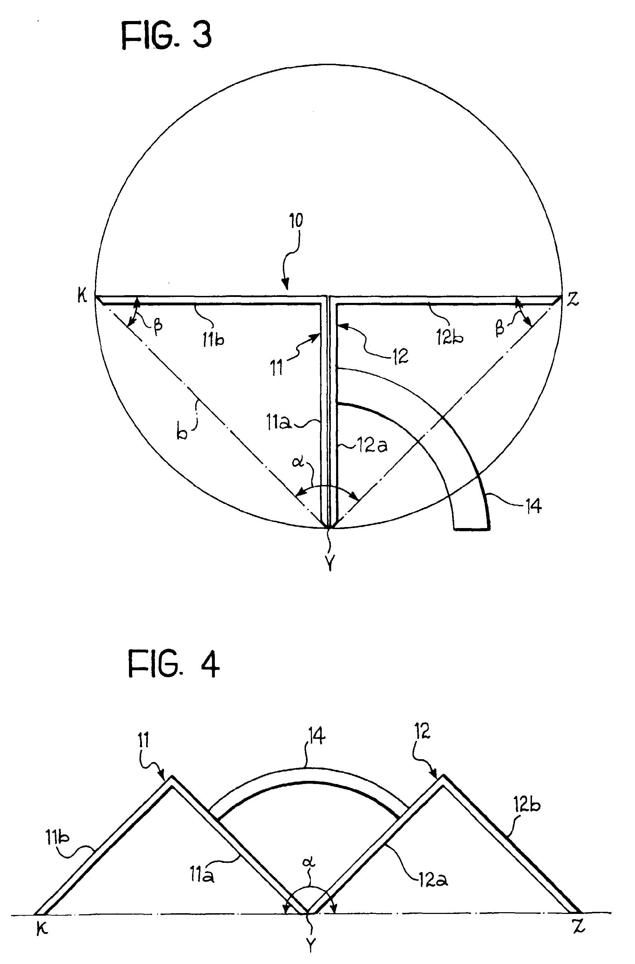

With reference to Figures 3, 4 and 5, the instrument according to the present invention, generally indicated 10, is constructed so as to have a fixed value of $\underline{b}$ and enables the value of β to be determined quickly in order thus to derive the diameter 2R of a circle or of a portion of a circle to which the instrument 10 is applied.

The instrument 10 comprises a pair of L-shaped arms, indicated 11 and 12, in each of which a first portion 11a, 12a is defined; from these portions, which are of equal length, respective second portions 11b and 12b of equal length to the first portions 11a and 12a extend perpendicular. The two arms 11, 12 are articulated to one another at the ends of the first portions 11a and 12a, at a point Y.

Each of the two L-shaped arms 11 and 12 defines a right-angled isosceles triangle having a hypotenuse of predetermined and known length $\underline{b}$.

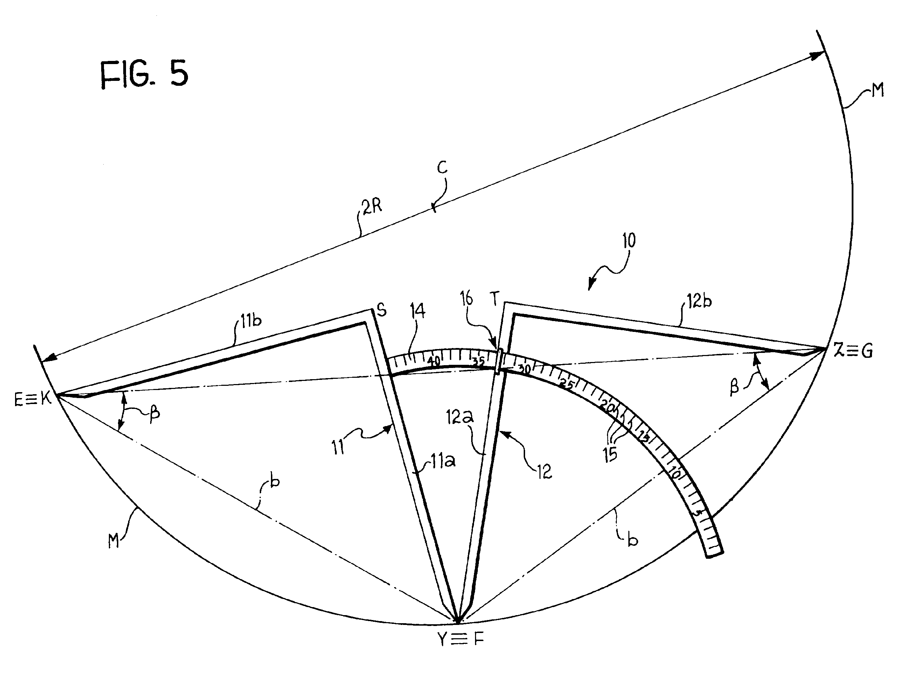

As shown in Figure 5, an arcuate element 14 is fixed to the first portion 11a of the arm 11 and extends towards the arm 12 from the opposite side to that on which the second portion 12b extends; the arcuate element 14, to which a graduated scale 15 is applied, is intersected by a reading indicator 16 carried by the first portion 12a of the arm 12 and constituted, for example, by an element in the form of a slot through which the arcuate element 14 can slide during the opening and closure movements of the arms. The graduated scale on the arcuate element 14 subtends an angle of 90°.

In the embodiment of Figure 5, the graduated scale 15 gives values of the angle β and is calibrated as indicated schematically in Figures 3 and 4, so as to read β = 45° when the portions 11a and 12a of the two arms are brought together (Figure 3), and β = 0° when the portions 11a and 12a define an angle of 90° (Figure 4).

The two articulated arms 11, 12 define three reference points K, Y and Z which are positioned, respectively, at three distinct points E, F and G on the circle the diameter of which is to be found, or on the portion of curve the radius of curvature of which is to be found.

The reference point Y of the articulation of the two arms 11, 12 is positioned at a point F selected according to choice on the curve M and the arms 11, 12 are opened out until their end reference points K and Z are positioned precisely on the curve M, at the points E and G.

Since the reference points K and Z are at a known and constant distance $\underline{b}$ from the articulation reference point Y, the diameter 2R of the circle is obtained, by means of equation (1) given above, from the reading of the value of the angle β indicated by the reading indicator 16 on the graduated scale 15.

For example, given that KY = = YZ = $\underline{b}$ = 130.5 mm, with a reading of β = 33° equation (1) gives:

$$2R = 130.5/\sin 33° = 239.6 \text{ mm.}$$

According to a variant of the present invention, not shown, the graduated scale 15 may give directly the diameter values corresponding to the various relative angular positions which can be adopted by the arms of the instrument, these diameter values again being calculated by means of equation (1) given above.

The instrument may advantageously be provided with releasable locking means for temporarily fixing the relative positions of the two arms and enabling the reading of the angle β to be taken after the instrument has been removed from the curve M without losing the reference point obtained during the measurement; for example, the reading indicator 16 may be in the form of a lever which can be clamped onto the arcuate element 14 which bears the graduated scale.

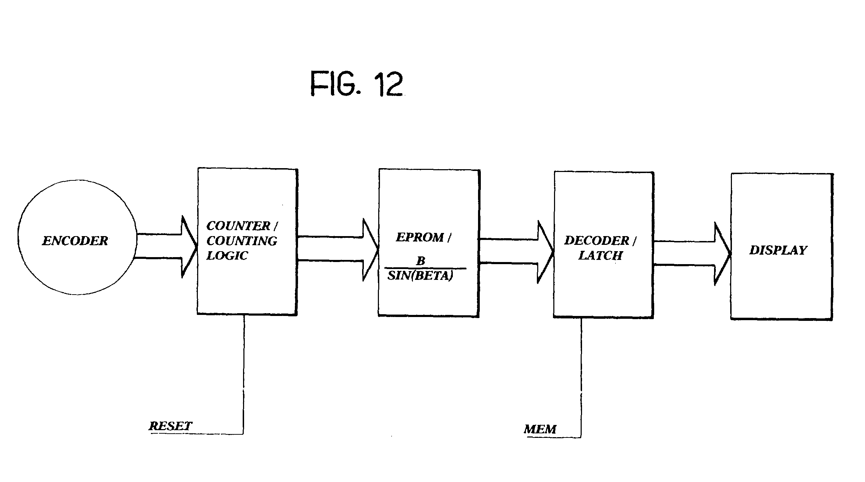

According to a variant of the invention, the measuring instrument may have a display on which the reading of the diameter sought will appear automatically. For this purpose, the instrument has a digital position transducer device which is associated with an electronic circuit, as indicated in the block diagram of Figure 12, and which operates in dependence on the variation of the angle β defined by the angle of opening of the arms 11, 12 of the instrument 10.

This transducer device is preferably an incremental optical encoder of known type including a rotary disc which is rotated by the opening of the arms 11, 12 and has alternate clear and dark circumferential regions, a source (LED) of light which intercepts the light and dark regions, and a light detector which can generate a series of pulses when it receives the light filtered or reflected by the light regions of the disk. Rotation of the disk thus produces a series of pulses which can be counted to determine the angle β.

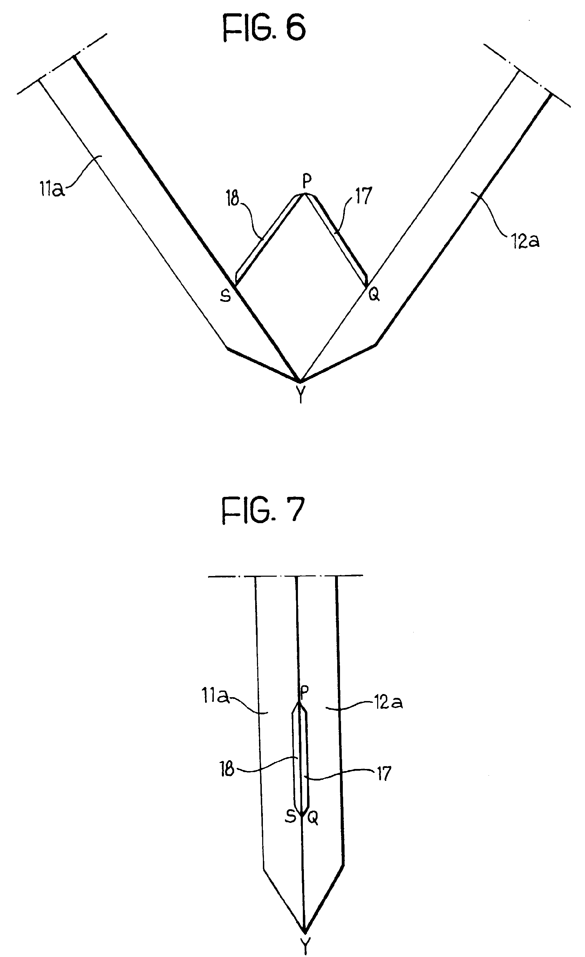

With reference to Figure 6, the variant of the instrument of the present invention having the encoder, provides for the encoder (which is not shown for simplicity) to be mounted on an articulated quadrilateral linkage comprising a pair of rods 17 and 18 articulated to one another by respective first ends at a point P, and articulated to the arms 11 and 12 by their respective other ends at points Q and S selected such that PS = PQ = SY = YQ.

As will be clear, the angles SPQ and SYQ are equal, so that variations of the angle of opening of the arms 11 and 12 are reproduced precisely by the arms 17 and 18.

The encoder is operatively associated with the rods 17 and 18 in order to perceive the variations in the angle between the rods, by means of a first gearing (not shown) located at the articulation point P. The rotation of the first gearing is transmitted and multiplied in a manner known and therefore not described herein, to a final or last gearing, preferably in a manner such that the latter performs one complete and precise revolution upon each one-degree variation in the angle of opening of the arms 11 and 12.

The encoder shaft (not shown) is connected to the latter gearing with a ratio of 1:1 and the display displays the diameter value by means of the above-mentioned electronic circuit.

The above-mentioned multiplication of the rotary movement is advantageous since it ensures a precise measurement for any angle measured; as is known, for a given amplitude measured, this precision is greater the greater is the number of revolutions performed by the encoder shaft.

The quadrilateral linkage advantageously allows the encoder to be located in a position remote from the articulation Y without creating obstructions which would limit the applicability of the instrument.

Figure 12 is a block diagram of an electronic circuit which enables the calculation to be performed and the diameter value sought to be displayed. The first block is constituted by the encoder which detects the angular displacement β of the arms 11, 12 and supplies pulses corresponding to the rotation to the next, counter/ counting logic block. This block counts the pulses generated by the encoder and addresses the cell of an EPROM corresponding to the number counted, which corresponds to a precise value of the angle β. The EPROM block contains the diameter value sought, that is b/sin β, stored in its addresses. The Decoder/Latch block converts the datum output by the EPROM to enable it to be interpreted by the display; the display displays the diameter value sought. A storage function (MEM) and a resetting function (RESET) with respective pushbuttons are also provided; the former enables the datum on the display to be stored so that it remains visible even when the instrument is closed again; the latter enables the display to be reset once the value displayed has been read.

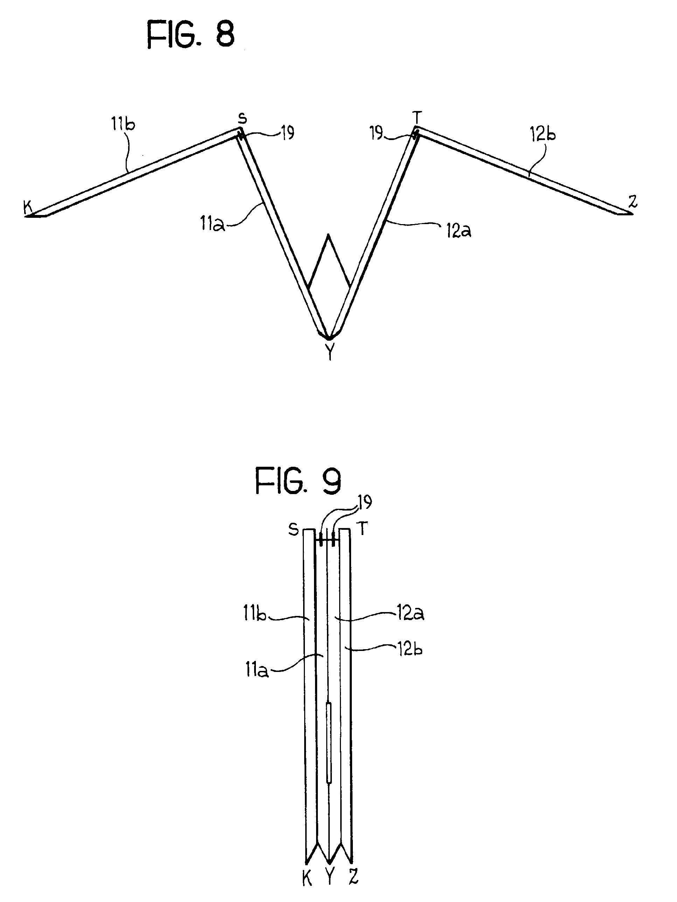

With reference to Figures 8 and 9, another variant of the invention provides for the second portions 11b and 12b to be removable or foldable for more convenient transportation of the instrument 10 in a folded condition (Figure 9). For this purpose, hinges (not shown) are provided at the vertices S and T at which the portions 11a, 12a and 11b, 12b are joined, the hinges being associated with respective catches 19 for releasably locking the arms 11 and 12 in their right-angled, operative configurations.

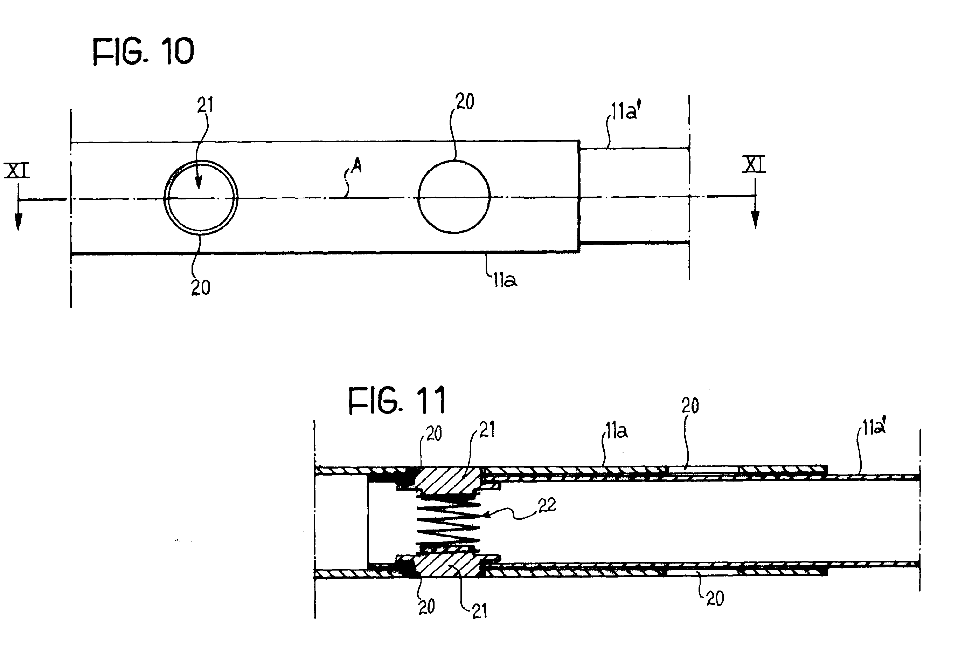

With reference to Figures 10 and 11, according to a further variant of the present invention, the four portions 11a, 11b, 12a, 12b of the arms 11 and 12 may be extendible, for example, telescopically, so as to increase the accuracy of the instrument. For this purpose, all of the portions 11a, 11b, 12a, 12b will have respective telescopic elements 11a', 11b', 12a', 12b' which extend the arm portions on which they are mounted by the same length; all of the arm portions will also be of equal length in the extended condition. This variant may be produced, for example, by providing each portion 11a, 11b, 12a, 12b with spaced-apart holes 20 for selective engagement by a stop element 21 mounted on the telescopic element 11a', 11b', 12a', 12b' and urged towards a locking position by a resilient element 22.

A change in length of this type, which corresponds to a change in the parameter b in equation (1), is communicated to the electronic circuit provided for the encoder with the use of a suitable key, in order for the diameter 2R to be calculated, taking account of the value of b currently defined by the extension of the arms.

It will be clear to those skilled in the art that the changes in the length of the arms may also be communicated to the calculating electronics of the instrument automatically by means of a system comprising sensors located in the arms and capable of measuring their length and transmitting corresponding data to the calculating electronics by means of appropriate circuitry.

A sensor system of this type may optionally be arranged for recognizing an incorrect operating condition in which the four arm portions are not of equal length, causing an error message (ERROR) to appear on the display.

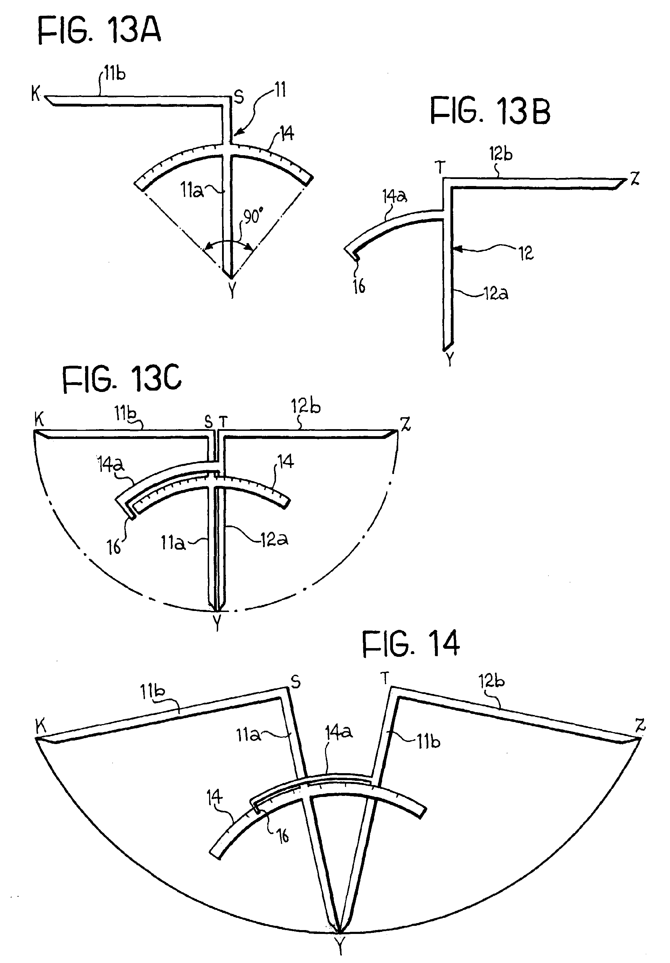

Finally, with reference to Figures 13A, 13B, 13C and 14, according to yet a further variant, the arcuate element 14 may be fixed to or formed integrally with the arm 11 (Figure 13A) so as to project symmetrically relative to the first portion 11a thereof. The reading indicator 16 is cantilevered from the arm 12 by means of an arcuate support 14a which preferably has a curvature corresponding to that of the arcuate element 14. In comparison with the variant shown in Figure 5, this latter embodiment advantageously enables the arcuate element 14 to be contained inside the curve, that is, on the concave side, enabling the diameter of a body with a cylindrical wall to be measured.

## Claims

1. An instrument for determining the diameter of a circle, characterized in that it comprises:

   - a pair of arms articulated to one another and having three reference points which can be positioned at three respective points (F, E, G) on the circle, a first reference point (Y) being located at the articulation, a second reference point (K) being located on one (11) of the arms, and a third reference point (Z) being located on the other (12) arm, the second reference point (K) and the third reference point (Z) being disposed at the same distance (b) from the first reference point (Y),

   - means (14, 15, 16) for measuring an angle (β) formed by a straight line joining the second point (E) and the third point (G) and by a straight line joining the second point (E) or the third point (G) to the first point (F),

   so as to determine, by means of the equation

   $$2R = b/\sin \beta$$

   the diameter (2R) of a circle extending through the three points (F, E, G).

2. An instrument according to Claim 1, characterized in that the means for measuring an angle comprise a graduated scale (15) applied to an element (14) carried by one (11) of the arms and a reading indicator (16) carried by the other arm (12).

3. An instrument according to Claim 2, characterized in that the element to which the graduated scale (15) is applied is an arcuate element.

4. An instrument according to Claim 3, characterized in that the reading indicator (16) defines a seat which can receive the arcuate element (14) slidably.

5. An instrument according to Claim 1, characterized in that it further comprises a locking means (16) for releasably fixing the relative positions of the two arms.

6. An instrument according to Claim 1, characterized in that both of the arms (11, 12) are L-shaped and have respective first portions (11a, 12a) which are of equal length and from which respective second portions (11b, 12b), of the same length as the first portions, extend perpendicularly, carrying the second and third reference points (K, Z) at their ends.

7. An instrument according to Claim 6, characterized in that each of the two arms (11, 12) defines an isosceles, right-angled triangle having a hypotenuse of length (b).

8. An instrument according to Claim 6, characterized in that it further comprises:

   - optical reading means mounted on the instrument for detecting the angle defined by the first portions (11a, 12a) of the arms (11, 12),

   - electronic processing means, connected to the optical reading means and suitable for providing data indicative of the angle (β) measured, and

   - a display means for displaying the data supplied by the electronic processing means.

9. An instrument according to Claim 8, characterized in that the processing means are also arranged to process the data relative to the angle (β) and, on the basis of the distance (b), to supply data relating to the diameter of the circle to the display means.

10. An instrument according to Claim 1, characterized in that the optical reading means comprise an encoder mounted, in a position distinct from the articulation, on an articulated quadrilateral support linkage, in order to measure an angle formed by a pair of rods (17, 18) of the linkage and corresponding to the angle (β).

11. An instrument according to Claim 9, characterized in that the encoder is associated with a gearing which can perform one complete and precise revolution for every one-degree variation of the angle (β).

12. An instrument according to Claim 6, characterized in that the second portions (11b, 12b) of the arms (11, 12) are connected to the first portions (11a, 12a) releasably.

13. An instrument according to Claim 6, characterized in that the second portions (11b, 12b) of the arms (11, 12) are connected to the first portions (11a, 12a) in a foldable manner, locking means (19) being provided for releasably locking the second portions to the first portions in positions perpendicular to one another.

14. An instrument according to Claim 6, characterized in that the first and second portions (11a, 11b, 12a, 12b) can be extended by equal lengths, with the ability to adopt at least one extended configuration which can be fixed releasably by means of stop elements (21).

15. An instrument according to Claim 2, characterized in that the graduated scale (15) carries values of the angle (β).

16. An instrument according to Claim 2, characterized in that the graduated scale (15) gives diameter or radius values calculated by means of the equation:

$$2R = b/\sin \beta.$$

# FIG. 1

# FIG. 2

# FIG. 3

# FIG. 4

FIG. 5

EP 1 058 086 A1

# FIG. 6

# FIG. 7

# FIG. 8

# FIG. 9

FIG. 10

FIG. 11

# FIG. 12

EP 1 058 086 A1

```
ENCODER  ⟹  COUNTER /        ⟹  EPROM /        ⟹  DECODER /  ⟹  DISPLAY
             COUNTING             B                  LATCH
             LOGIC            —————————
                              SIN(BETA)
```

RESET

MEM

FIG. 13A

FIG. 13B

FIG. 13C

FIG. 14

## EUROPEAN SEARCH REPORT

European Patent
Office

**Application Number**

EP 00 11 1608

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | JP 60 151501 A (MITSUBISHI) 9 August 1985 (1985-08-09) * figures 1,2 * | 1 | G01B5/213 |
| X | US 5 154 003 A (C.R.MOORE) 13 October 1992 (1992-10-13) * figures 3A,4A * | 1 | |
| A | DE 42 41 335 A (CHUO) 24 February 1994 (1994-02-24) * figure 1 * | | |
| A | DE 32 05 894 A (HYDRIL) 25 August 1983 (1983-08-25) * figure 4 * | | |
| A | JP 58 068607 A (MITSUBISHI) 23 April 1983 (1983-04-23) * figure 5 * | | |

| | | | TECHNICAL FIELDS SEARCHED (Int.Cl.7) |
|---|---|---|---|
| | | | G01B |

The present search report has been drawn up for all claims

| Place of search | Date of completion of the search | Examiner |
|---|---|---|
| MUNICH | 29 August 2000 | Mielke, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 058 086 A1

## ANNEX TO THE EUROPEAN SEARCH REPORT
## ON EUROPEAN PATENT APPLICATION NO.

EP 00 11 1608

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2000

| Patent document cited in search report | | Publication date | Patent family member(s) | | Publication date |
|---|---|---|---|---|---|
| JP 60151501 | A | 09-08-1985 | NONE | | |
| US 5154003 | A | 13-10-1992 | NONE | | |
| DE 4241335 | A | 24-02-1994 | JP 2063617 C | | 24-06-1996 |
| | | | JP 6066550 A | | 08-03-1994 |
| | | | JP 7072688 B | | 02-08-1995 |
| DE 3205894 | A | 25-08-1983 | NONE | | |
| JP 58068607 | A | 23-04-1983 | NONE | | |

EPO FORM P0459

For more details about this annex : see Official Journal of the European Patent Office, No. 12/82

15